# EUROPEAN PATENT APPLICATION

(11) **EP 2 098 444 A1**
(43) Date of publication of application: **09.09.2009**
(21) Application number: 09003318.4
(22) Date of filing: 06.03.2009
(51) Int. Cl.: B62K 21/26

(54) **Handlebar grip**

(30) Priority: 07.03.2008 TW 97108158; 16.05.2008 TW 97117946
(71) Applicant: Chen, Jia-Pin, Taichung County 437 (TW); Chao, Kuo-Chin, Taichung County 437 (TW)
(72) Inventor: Chen, Jia-Pin, Taichung County 437 (TW); Chao, Kuo-Chin, Taichung County 437 (TW)
(74) Representative: Straus, Alexander

(57) **Abstract**

A vehicular handlebar grip (10) includes a central portion (20), a grip portion (30), and a support portion (32). The central portion (20) includes a first end (22) and a second end (24). The grip portion (30) is located at one side of the central portion (20), extending toward a direction away from a long axis (21) extending from the first end (22) toward the second end (24). The support portion (32) is located an opposite side of the central portion (20) relative to the grip portion (30), extending toward a direction away from the long axis (21). Accordingly, when the vehicular handlebar grip (10) is applied to a bicycle, the cyclist can adjust the contact area where the wrist lies against the support portion (32) according to the cyclist's different riding postures to allow more space for movement of the palm for more comfortableness.

## Description

### BACKGROUND OF THE INVENTION

### 1. Field of the Invention

The present invention relates generally to vehicular parts, and more particularly, to a handlebar grip for a vehicle.

### 2. Description of the Related Art

A general bicycle handlebar includes two handgrips sleeved onto two ends thereof respectively and a cyclist can hold the handgrips for steering the bicycle.

To enable the cyclist to more comfortably hold the handgrips while riding the bicycle, the handgrips are usually made of resilient material for reducing the pressure under which the cyclist holds the handgrips. However, when the cyclist changes his/her riding posture or incorrectly applies a force, the cyclist's palms or wrists may feel sore and even get sport injury like nerve strain.

U.S. Pat. Pub. No. 2008/0072702 disclosed a bicycle handlebar grip, which can support the cyclist's wrist to unbend the wrist and keep alignment between the hand and the arm as much pas possible in such a way that the nerves in the wrist can avoid strain. However, the aforesaid conventional handlebar grips could be held at only one single angle or along only one single direction, and when the bicycle is ridden on different terrains, the cyclist's wrist fails to adjustably hold the handlebar grips. As the cycling distance and time prolong, the cyclist feels that the wrists are tenser and tenser or sorer and sorer because the cyclist fails to hold the handlebar grips comfortably.

### SUMMARY OF THE INVENTION

The primary objective of the present invention is to provide a vehicular handlebar grip, which can be adjustably held at various angles to bring more comfortableness and avoid sport strain for the cyclist.

The foregoing objective of the present invention is attained by the vehicular handlebar grip composed of a central portion, a grip portion, and a support portion. The central portion includes a first end and a second end. The grip portion is located at one side of the central portion, extending toward a direction away from a long axis. The support portion is located at an opposite side of the central portion relative to the grip portion, extending toward a direction against a long axis.

### BRIEF DESCRIPTION OF THE DRAWINGS

FIG. 1 is a perspective view of a first preferred embodiment of the present invention.
FIG. 2 is a front view of the first preferred embodiment of the present invention.
FIG. 3 is a sectional view taken along a line 3-3 indicated in FIG. 2.
FIG. 4 is a right view of the first preferred embodiment of the present invention;
FIG. 5 is a schematic view of the first preferred embodiment of the present invention held by a cyclist.
FIG. 6 is a front view of the first preferred embodiment of the present invention mounted to a bicycle handlebar.
FIG. 7 is another schematic view of the first preferred embodiment of the present invention held by the cyclist.
FIG. 8 is a right view of the first preferred embodiment of the present invention held by the cyclist.
FIG. 9 is a front view of a second preferred embodiment of the present invention.
FIG. 10 is a schematic view of the second preferred embodiment of the present invention held by the cyclist.
FIG. 11 is a front view of a third preferred embodiment of the present invention.
FIG. 12 is a rear view of a fourth preferred embodiment of the present invention.

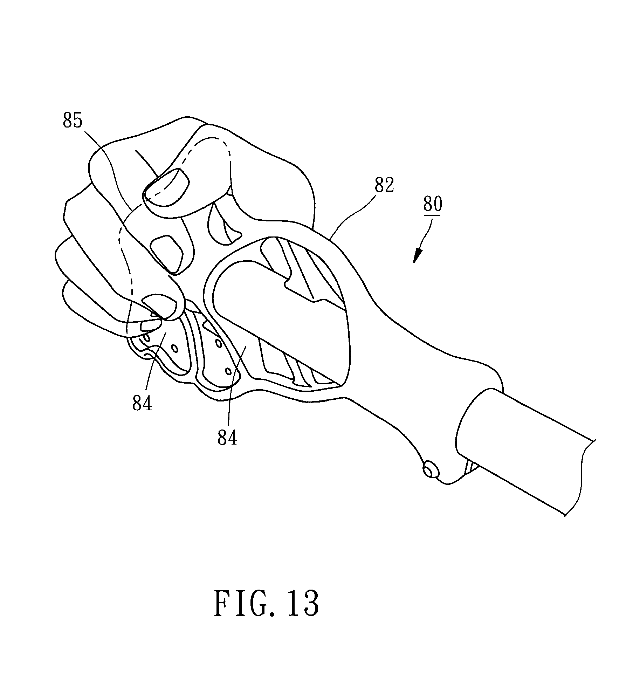

FIG. 13 is a schematic view of the fourth preferred embodiment of the present invention held by the cyclist.

### DETAILED DESCRIPTION OF PREFERRED EMBODIMENTS

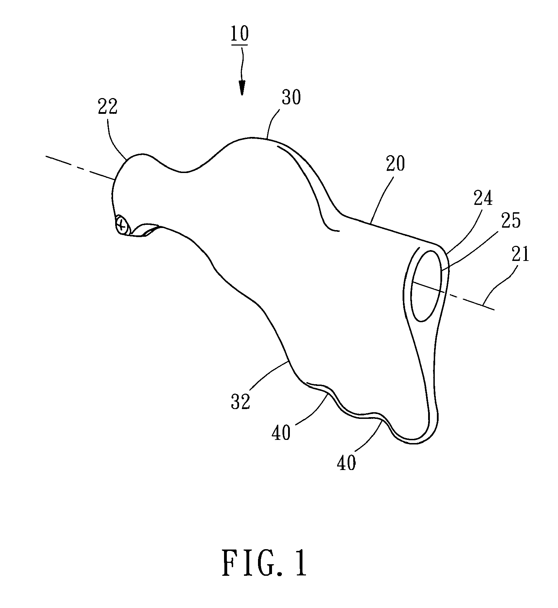

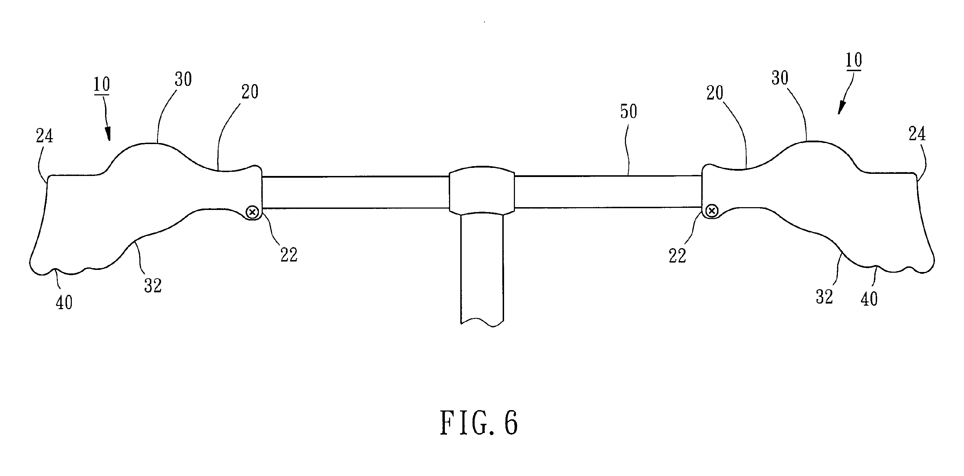

Referring to FIG. 1, a vehicular handlebar grip 10 constructed according to a first preferred embodiment of the present invention is composed of a central portion 20, a grip portion 30, and a support portion 32. The central portion 20 includes a first end and a second end 24. The grip portion 30 is located at one side of the central portion 20, extending toward a direction away from a long axis extending from the first end 22 toward the second end 24. The support portion 32 is located at an opposite of the central portion 20 relative to the grip portion 30, extending toward a direction away from the long axis. The central portion 20 includes an axial hole 25 extending toward the second end 24 from the first end 22, whereby an opening is formed at each of the first and second ends 22 and 24. The handlebar grip 10 can be sleeved onto each of two ends of a bicycle handlebar 50, as shown in FIG. 6, through the two openings and the axial hole 25.

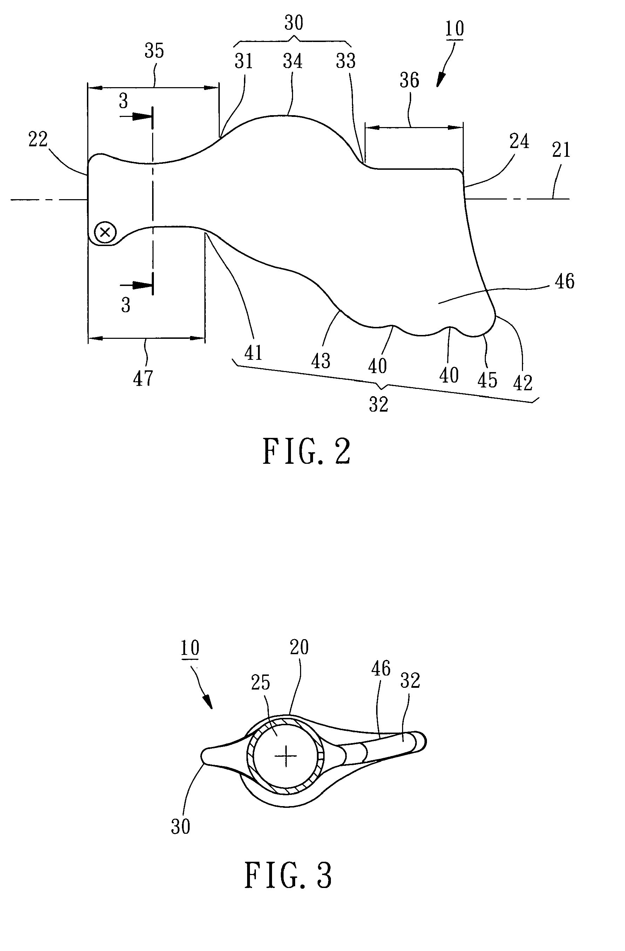

Referring to FIGS. 2-4, the grip portion 30 includes an initial end 31, a distal end 33, and an arched body portion 34 located between the initial and distal ends 31 and 33. A first interval 35 is defined between the initial end 31 and the first end 22. A second interval 36 is defined between the distal end 33 and the second end 24. The body portion 34 extends along the long axis 21 from the initial end 31 toward the distal end 33 to define an arc-shaped external edge.

The support portion 32 includes an initial end 41, a distal end 42, and a sheety body portion 43 located between the initial and distal ends 41 and 42. An interval 47 is defined between the initial and first ends 41 and 22. The body portion 43 extends along the long axis 21 from the initial end 41 toward the distal end 42 for a predetermined length. The body portion 43 has an external margin 45. The distance between the external margin 45 and the long axis 21 gradually increases from the initial end 41 toward the distal end 42 in such a way that the external margin 45 is shaped like a wing. The external margin 45 has a plurality of concave portions 40 for placing the cyclist's fingers. The support portion 32 further includes an upper surface 46 for placing the cyclist's palm. The lateral shapes of the grip portion 30 and the support portion 32 are curvy, decreasingly extending toward a direction away from the long axis 21 to enable the grip portion 30 and the external margin 45 to be held by the cyclist's fingers.

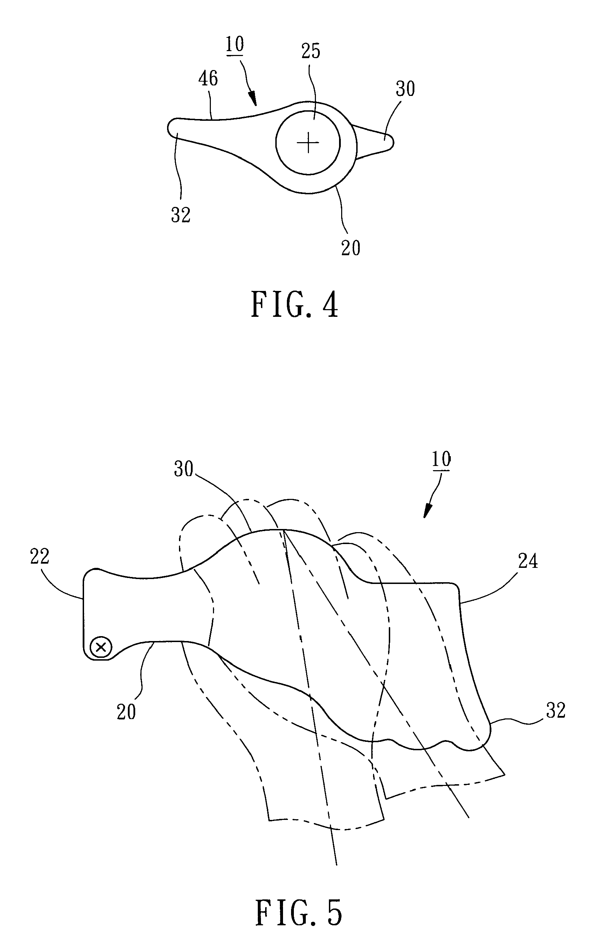

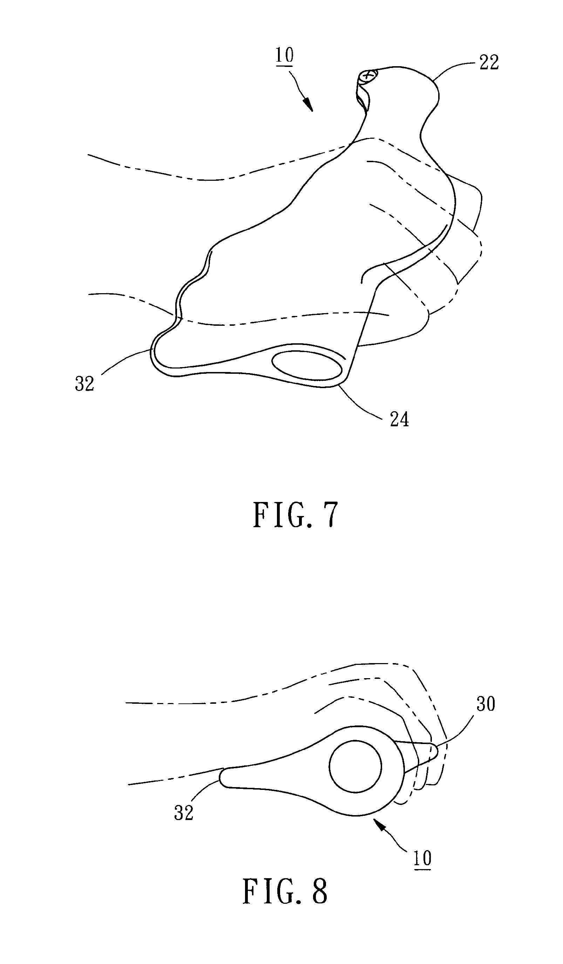

Referring to FIGS. 5 and 6, when the handlebar grip 10 is sleeved onto the bicycle handlebar 50 through the central portion 20 and the cyclist holds the central portion 20, the grip portion 30 can be held by the cyclist's four fingers except the thumb and the support portion 32 is located beneath the wrist. As shown in FIGS. 7 and 8, the cross-sections of the grip and support portions 30 and 32 are curvy to match the grapple of cyclist's hand, such that the cyclist's fingers can grasp the handlebar grip 10 securely. Besides, each of the cyclist's fingers can contact against and engage the external edge of the grip portion 30 to enable the hand to effectively grasp the handlebar grip 10.

Because the support portion 32 covers the relatively wider area, the cyclist can change the contact area and angle that the wrist lies against the support portion 32 according to the terrains on which the bicycle is ridden. Hence, there is more space for movement of the cyclist's wrist and the alignment is maintained between the palm and the arm.

To sum it up, the handlebar grip 10 of the present invention is applicable to the handlebars of various sporting apparatuses or vehicles to include the following advantages: the cyclist's hands can grasp it very much; there is much space for movement of the wrist; it prevents the wrist from hovering; the palm keeps aligned with the arm; and the pressure and the counterforce applied to the ulnar nerves can be relieved for more comfortableness, longer cycling time and distance, and reducing sport injury.

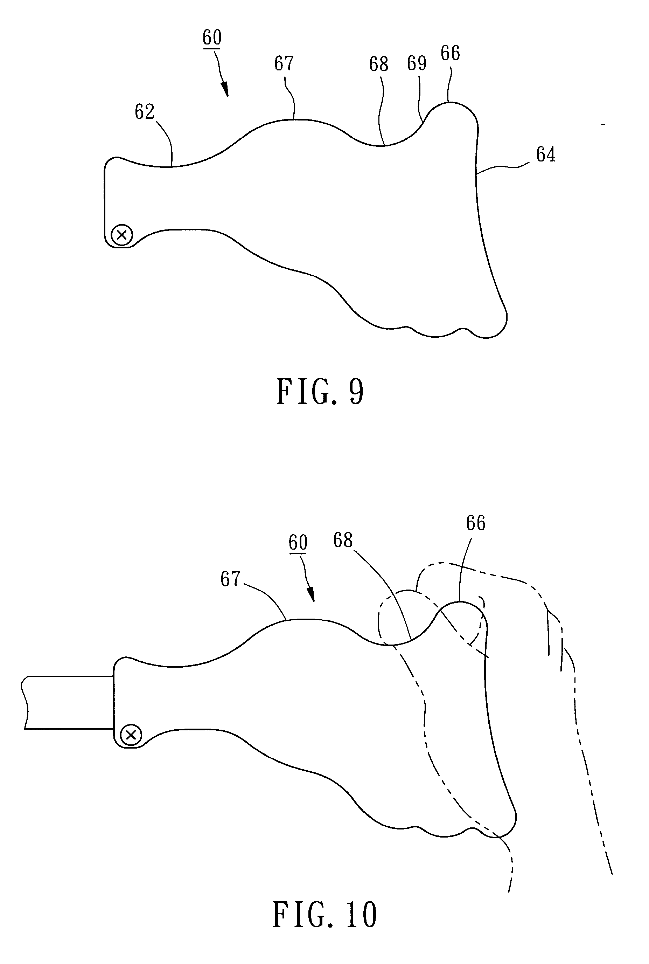

Referring to FIGS. 9 and 10, a handlebar grip 60 constructed according to a second preferred embodiment of the present invention is similar to that of the first embodiment, having the following difference. The central portion 62 includes a projection 66 formed in one piece with a top side of the second end 64 and extending outward toward the same direction as that of the grip portion 67. The projection 66 has an inclined side 69. A concave portion 68 is formed between the inclined side 69 and the grip portion 67. When the cyclist intends to stand on the pedals of the bicycle for cycling, the cyclist's hands can grasp the second 64 of the central portion 64 by that the part of the hand between the thumb and the index finger lies against the projection 66, the thumb is placed at the concave portion 68, and the other four fingers grapple the second end 64. Therefore, such design is very convenient for the cyclist's operation and it is not necessary to install an accessory handlebar grip to the bicycle handlebar.

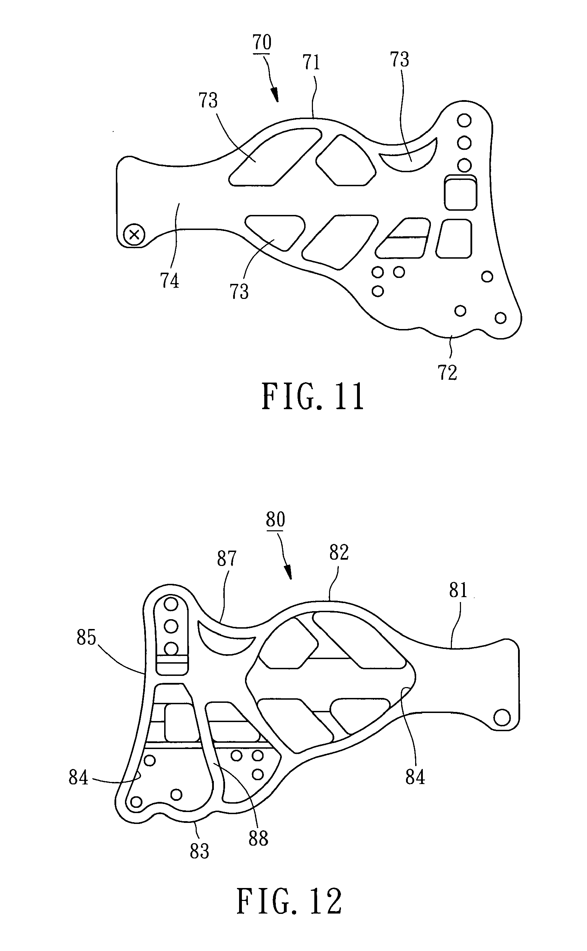

Referring to FIG. 11, a handlebar grip 70 constructed according to a third preferred embodiment of the present invention is similar to that of the aforesaid embodiment, having the following difference. Each of the grip portion 71 and the support portion 72 includes a plurality of through holes 73 running therethrough in such a way that the grip portion 71 and the support portion 72 are structurally meshy. The through holes 73 can reduce the weight of the handlebar grip 70. When the cyclist's hand grasp the central portion 74, the palm can not only fully closely touch the handlebar grip 70 but also feel not too much pressure, thus facilitating longtime grapple for the cyclist. In addition, each of the through holes 73 can be alternatively provided with a springy member for more grapple comfortableness.

Referring to FIG. 12, a handlebar grip 80 constructed according to a fourth preferred embodiment of the present invention is similar to that of the third embodiment, having the following difference. Each of the central portion 81, the grip portion 82, the support 83, a lower surface 88 of the projection 87 includes a plurality of recessions 84 for reducing the weight of the handlebar grip 80. Besides, when the cyclist's hand holds the second 85, the thumb can be placed at the concave portion 87 and the other fingers can be placed at the recessions 84, whereby the cyclist's hand can grasp the handlebar grip 80 much better.

Although the present invention has been described relative to specific preferred embodiments thereof, it is no way limited to the details of the illustrated structures but changes and modifications may be made within the scope of the appended claims.

## Claims

1. A vehicular handlebar grip (10) being **characterized in** comprising a central portion (20), a grip portion (30), and a support portion (32), the central portion (20) having a first end (22) and a second end (24), the grip portion (30) being located at a side of the central portion (20) and extending toward a direction away from a long axis (21) extending from the first end (22) toward the second end (24), the support portion (32) being located at an opposite side of the central portion (20) relative to the grip portion (30) and extending toward a direction away from the long axis (21).

2. The handlebar grip (10) as defined in claim 1, wherein the support portion (32) comprises an upper surface (46) for placing a cyclist's palm.

3. The handlebar grip (10) as defined in claim 1, wherein the grip portion (30) comprises an arc-shaped external edge for a cyclist's fingers to grasp.

4. The handlebar grip (10) as defined in claim 1, wherein the central portion (20) comprises an axial hole (25), the axial hole (25) having an opening located at the first and second ends (22, 24).

5. The handlebar grip (10) as defined in claim 1, wherein the support portion (32) comprises an initial end (41), a distal end (42), and a sheety body (43) portion located between the initial and distal ends (41, 42), an interval (47) being defined between the initial end (41) and the first end (22) of the central portion (20), the body portion (43) extending along the long axis (21) from the initial end (41) toward the distal end (42).

6. The handlebar grip (10) as defined in claim 5, wherein the body portion (43) comprises an external margin (45), the distance between the external margin (45) and the long axis (21) gradually increases from the initial end (41) toward the distal end (42).

7. The handlebar grip (10) as defined in claim 6, wherein the external margin (45) comprises a concave portion (68).

8. The handlebar grip (10) as defined in claim 1, wherein the grip portion (30) comprises an initial end (31), a distal end (33), and an arched body portion (34) located between the initial and distal ends (31, 33), a first interval (35) being defined between the initial end (31) and the first end (22), a second interval (36) being defined between the distal end (33) and the second end (24), the body portion (34) extending long the long axis (21) from the initial end (31) toward the distal end (33).

9. The handlebar grip (60) as defined in claim 1 further comprising a projection (66), the projection (66) being mounted to the second end (64) and extending outward toward a direction away from the long axis (21), the projection (66) having an inclined side (69), a concave portion (68) being formed between the inclined side (69) and the grip portion (67).

10. The handlebar grip (80) as defined in claim 9, wherein the support portion (83) comprises a lower surface (88), the lower surface (88) having a recession (84) formed relative to the projection (87).

11. The handlebar grip (70, 80) as defined in claim 9, wherein the grip portion (71, 82) or the support portion (72, 83) comprises a through hole (73).
